# EUROPEAN PATENT SPECIFICATION

(11) **EP 2 896 941 B1**
(45) Date of publication and mention of the grant of the patent: **04.03.2020**
(21) Application number: 14152305.0
(22) Date of filing: 23.01.2014
(51) Int. Cl.: G01J 3/02, G01J 3/18, G01J 3/14, G02B 5/04, G02B 17/08

(54) **Miniature spectrometer comprising dispersive body**
Spektrometer mit einem dispersiven Körper
Spectromètre comprenant élément dispersif

(30) Priority: 21.01.2014 US 201461929684 P
(43) Date of publication of application: 22.07.2015
(73) Proprietor: ams AG, 8141 Premstätten (AT)
(72) Inventor: Wang, Yu, Plano, TX 75074 (US); Glover, Kerry, Rockwall, TX 75087 (US); Stoltz, Greg, Flower Mound, TX 75028 (US); Townson, Will, Celina, TX 75009 (US)
(74) Representative: Epping - Hermann - Fischer

(56) References cited:
- EP-A1- 2 615 435
- WO-A1-01/86848
- US-A1- 2012 063 166

## Description

This invention relates to a dispersive element for a spectrometer and to a spectrometer.

A spectrometer is used to measure and identify light frequencies or wavelengths. A typical prism spectrometer usually has three major elements: a collimation lens, a prism and a focus lens. All spectrometer elements need to be precisely mounted and aligned in a rigid frame, which make prism-based optical spectrometers bulky and costly. There is a need in the art for a low cost miniature spectrometer which can be mounted on a silicon chip.

EP 2,615,435 A1 shows a dispersive element which is designed to receive incident light and disperse the incident light into multiple spatially separated wavelengths of light. The dispersive body comprises a collimation cavity to collimate the incident light, at least two optical interfaces to receive and disperse the collimated light and a collection cavity to collect the dispersed light from the at least two dispersive interfaces and to focus the collected light.

WO 01/86848 A1 shows curved surfaces that are used to redirect dispersed light into several optical fiber tips. Two gratings are etched into a dispersive body. US 2012/063166 A1 relates to a collimating waveguide. The collimating waveguide comprises an input surface to receive radiant electromagnetic energy from a point source.

It is an objective to the present invention to provide a dispersive element and a spectrometer to spectrally separate wavelength of light incident on the dispersive element which is less bulky and costly.

This objective is achieved by the subject matter of the independent claims. Further embodiments are subject to dependent claims.

A dispersive element according to the present principle comprises a dispersive body made from an optically transparent material. The dispersive body has several surfaces, inter alia an entrance surface, a collimation surface, and a collection surface. Furthermore, the dispersive body has a first and a second optical interface.

The general layout of the dispersive element will be explained with respect to light entering and propagating inside the dispersive body.

Light incident on the dispersive element enters the dispersive body via the entrance surface. The collimation surface is positioned downstream the entrance surface. The collimation surface has a curvature that is designed to collimate the incident light by means of total internal reflection. The first and second optical interface are positioned downstream the collimation surface, in fact, positioned with respect to each other so that they receive the light previously collimated by the collimation surface. While propagating through the dispersive body light penetrates through the first and second optical interface. Both times the light experiences a change in index of refraction, either from high to low or from low to high values. Consequently, light is refracted at the optical interfaces. Thus, the collimated light penetrating through the first and second optical interface is dispersed due to the change in index of refraction. The collection surface has a curvature that is designed to collect the dispersed light from the second optical interface and focus the dispersed light onto a focal plane.

The functionality of the dispersive body, e.g. dispersion of the incident light into multiple and, with respect to the focal plane, spatially separated wavelengths of light, is supported by internal reflection at various surfaces of the dispersive body. Total internal reflection, or TIR for short, occurs if the refractive index is lower on the other side of an optical boundary and the incident angle is greater than the critical angle. In fact, the critical angle is defined as the angle of incidence above which total internal reflection occurs. As a consequence, a light wave incident on the boundary cannot pass through and is entirely reflected. The various surfaces of the dispersive body are optical boundaries in this sense. The term "by means of total internal reflection" indicates reflection at the surface. The collimation surface and the collection surface are optical boundaries so that light is reflected by TIR. Because of the curvature of their respective surfaces they act similar to optical lenses and have optical properties, i.e. collimating, collecting, and focusing light. The term "optical interface" also relates to an optical boundary and is characterized by a change in index of refraction between the two sides of the interface. Preferably, the collimation surface, first and second optical interface, and collection surface are arranged within a principle plane of the dispersive body.

In the following, if not stated otherwise, the term "light" refers to electromagnetic radiation in the visible spectrum between 400 nm and 800 nm. Preferably, the surfaces at which TIR and/or refraction of light occurs are made to optical surface accuracy. In certain applications the term light also includes infrared and ultraviolet light. Optical transparency describes the physical property of light being able to pass through a material. Preferably transmission lies within the visual spectrum between 400 nm and 800 nm or may even be extended into the near infrared up to 1000 nm and/or ultraviolet. Transparency should be high, for example higher than 50 %. The actual choice of material, however, depends on the application and desired spectral range. Criteria include sensitivity of the detector to be used with the dispersive element and desired signal to noise ratio.

The invention provides a dispersive element which can be produced at low cost, small size and without the need of internal cavities. In fact, it can be used to create a low cost miniature spectrometer on a silicon chip in a size smaller than a finger nail. The dispersive element uses curved surfaces that provide total internal reflection and collimation. The geometry of the dispersive element has been designed to use edges of the dispersive body to generate light dispersion. Furthermore, the design features improved manufacturability as the dispersive element can be made from a solid transparent body, for example in a standard molding process.

The dispersive element is made from a single dispersive body which comprises all optical elements, i.e. collimation and collection surface as well as first and second optical interfaces. This way the optical elements have optical grade precision and are precisely aligned. The dispersive element replaces expensive optical prisms or gratings and multi-lens spectrometer setups currently on the market. Means to align the optical elements in a rigid frame are not necessary. Furthermore, the optical elements need no further alignment and alignment is permanently preserved as the elements are integral parts of the dispersive body. This renders the dispersive element rather insensitive to mechanical shock and changes such as thermal expansion.

In a further embodiment, the collimation surface and/or the collection surface are positioned such that light entering the dispersive body via the entrance surface strikes the collimation surface and/or the collection surface under an angle equal or greater than the critical angle. As a consequence said light is reflected due to total internal reflection.

In a further embodiment, the optically transparent material of the dispersive body has a dispersion of index of refraction. The dispersion is high enough in value to disperse the incident light into multiple and, with respect to the focal plane, spatially separated wavelengths of light.

The degree to what extent the dispersion is "high enough in value" depends on the desired degree of spatial separation. For example, the focal plane onto which the dispersed light is focused can be the light sensitive area of a light detector. In order to image spatially separated wavelengths of light a resolution criterion has to be met, e.g. the Rayleigh criterion. Typically, the refractive index of materials varies with the wavelength and frequency of light.

In a further embodiment, the optically transparent material of the dispersive body comprises a solid, moldable material. By using a moldable material the dispersive element can be produced by standard molding techniques, e.g. injection plastic or glass molding. For example, precision glass molding is a process that allows the production of high precision optical components from glass without grinding and polishing. In fact, the molding of glass or plastic results in a high degree of optical precision of the surfaces of the dispersive body. Nevertheless, additional treatment, e.g. polishing, can further increase optical precision.

In a further embodiment, the optically transparent material of the dispersive body comprises a plastic. In particular, the plastic can be a thermoplastic or thermosetting plastic, e.g. polystyrene, polycarbonate, and/or OKP4. These materials can be formed by standard molding techniques, are transparent to visual light and feature a rather high dispersion of index of refraction.

In a further embodiment, the optically transparent material of the dispersive body comprises a glass. In particular, the glass can be a flint glass. Glass, especially flint glass, can be formed by standard molding techniques, is transparent to visual light and features a rather high dispersion of index of refraction.

In a further embodiment, the collimation surface and/or the collection surface have cylindrical, spherical, elliptical, parabolic, and/or hyperbolic curvature. The choice of curvature controls the optical properties of the surfaces of the dispersive body, e.g. collimating, collecting, and focusing light. In a certain sense the curvature of a surface of the dispersive corresponds to the curvature of an optical lens. Thus, the effects are similar and optical principles of beam shaping apply. For example, a curvature of a certain degree and form leads can be assigned to a focal length. However, while a lens transmits light a corresponding curved surface reflects light at its boundary.

In a further embodiment, the first and second optical interfaces are positioned such that the collimated light is incident on the interfaces at a tilted angle with respect to surface normals of the first and second optical interfaces, respectively. The tilted angle facilitates refraction at the optical interfaces and may be chosen to allow for desired spectral separation at a detector to be used with the dispersive element. For example, the first and second optical interface can be positioned with respect to each other that they form part of the surface of a prism. The prism can either be a triangular prism or of some other geometrical shape, e.g. Abbe prism, Pellin-Broca prism, Amici prism or compound prism made of more than a single prism. The tilted angle supports separation of light in a prism-like fashion.

In a further embodiment, the dispersive element comprises at least one (or more) planar surface(s). The at least one planar surface allows for directing a beam of incident light inside the dispersive body. For example, if the incident light strikes the planar surface(s) under an angle equal of greater than the critical angle, the light is reflected by means of total internal reflection. Optical losses are at minimum. Basically the at least one planar surface has the effect of an optical mirror or beam splitter. The at least one planar surface or further surfaces allow for a more compact layout of the dispersive body. Furthermore, the layout can be adjusted to fit to other, external components, e.g. in a spectrometer.

In a further embodiment, the dispersive element comprises at least one further curved surface. As described above a curved surface controls the optical properties of the surfaces of the dispersive body in a lens like manner. Further curved surface(s) can be used to allow for an additional degree of freedom in the design of the dispersive element. For example, divergence and spatial resolution can be fine-tuned.

In a further embodiment, the dispersive element comprises at least one exit surface which has a concave curvature. It is known that many materials have larger index of refraction at shorter wavelengths than at longer wavelengths. Thus, dispersion based spectrometers usually have lower resolutions at longer wavelengths than at shorter wavelengths. To improve resolution at longer wavelengths, the layout of the dispersive element can be complemented by a concave exit surface.

A spectrometer comprises a dispersive element according to the principles described above. Furthermore, an optical entrance aperture is positioned at a focal plane of the collimation surface. A light source is positioned in front of the optical entrance aperture. A light detector is positioned at a focal plane of the collection surface. The entrance aperture and/or light detector could also be integral parts of the dispersive body and positioned during fabrication.

The dispersive element is made from a single dispersive body which comprises the optical elements of the spectrometer and have optical grade precision and are precisely aligned. The dispersive element replaces expensive optical prisms and multi lens setups and is cheaper to fabricate. Advanced and bulky means to align and fix the optical elements within a rigid frame are not necessary. Furthermore, the optical elements need no further alignment and alignment is preserved as the elements are integral parts of the dispersive body. This renders the whole spectrometer rather insensitive to mechanical shock and changes such as thermal expansion. Thus, the spectrometer is both compact and robust.

In a further embodiment, the light source is positioned at a focal plane of the collimation surface.

In a further embodiment, the entrance aperture is a slit, a multi-slit, a pinhole, a multi-pinhole or a fiber-tip.

In a further embodiment, the detector is a linear array detector or a two dimensional detector, in particular a Charge Coupled Device (CCD) or a Complementary Metal Oxide Semiconductor detector (CMOS).

In the following, the principle presented above is described in further detail with respect to drawings, in which exemplary embodiments are presented.
- Figure 1: shows an exemplary embodiment of a dispersive element according to the principle presented,
- Figure 2: shows an exemplary embodiment of a spectrometer according to the principle presented,
- Figure 3: shows another an embodiment of a spectrometer for an improved understanding of the principle presented, and
- Figure 4: shows a test result using a spectrometer according to the principle presented.

Like reference numerals designate corresponding similar parts or elements.

A dispersive element comprises a single dispersive body 100, 200, 300 of molded plastic or glass. The dispersive element is made from a moldable transparent plastic or glass with several planar surfaces and several curved surfaces in order to form a spectrometer. The plastic or glass is optically transparent and has high optical dispersion of refraction index. The transparent plastic is thermoplastic or thermosetting plastic materials. The glass can be a flint glass. The spectrometer can be fabricated with conventional injection molding processes or by glass molding. Several of the planar surfaces function as total internal reflection (TIR) reflectors and several curved surfaces functions as light collectors. The optical surfaces require optical grade precision.

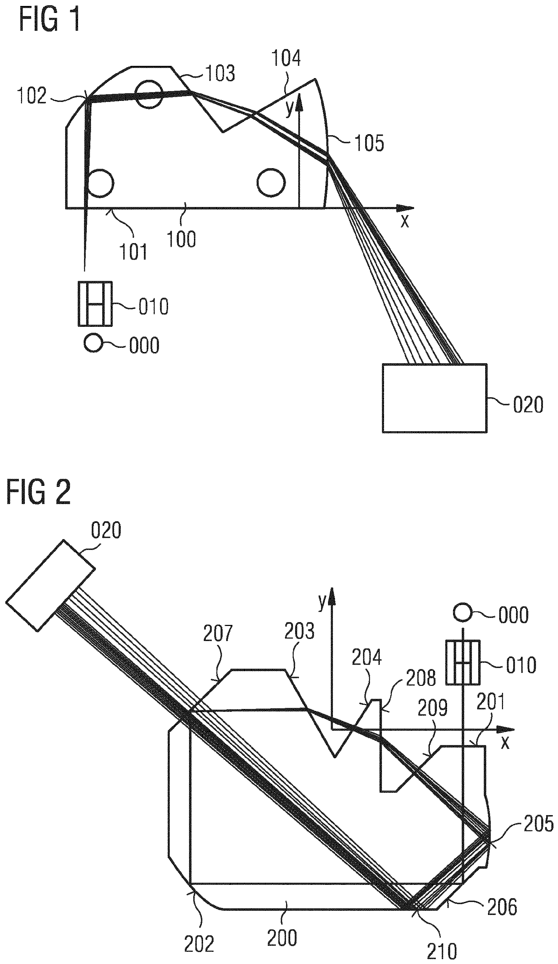

Figure 1 shows an exemplary embodiment of a dispersive element according to the principle presented.

The layout of the dispersive element and spectrometer may be best explained by following the path of light emitted by a light source 000 and entering a dispersive body 100. Basically, the dispersive body 100 has a principal plane x, y and basically the light propagates within this principal plane. The extension in height z is not shown in this drawing.

Light from said light source 000 first strikes an entrance aperture 010, e.g. a multi-slit aperture. The light expansion angle is limited by the entrance aperture 010. The light enters the dispersive body 100 at an entrance surface 101. The entrance aperture 010 and the entrance surface 101 can be directly connected to each other but could be spatially separated as well. The light is then collimated by a collimation surface 102 due to total internal reflection (TIR). The collimation surface 102 has a curvature that acts similar to an optical collimation lens. The distance between the entrance aperture 010 and the collimation surface 102 preferably is equal to the focal length associated with the collimation surface 102.

So collimated light then strikes a first optical interface 103 and exits the dispersive body 100. As a consequence different wavelengths of light are separated at the plastic (glass)/air interface 103 due to plastic or glass dispersion. The light enters the dispersive body 100 again at a second optical interface 104 and the wavelengths are separated further by the dispersion.

The light finally exits the dispersive body 100 at a collection surface 105. The curved surface 105 has a curvature that acts as both a prism and a lens. Light has more dispersion and different wavelengths are focused at a light detector 020, e.g. a linear sensor array, by the collection surface 105.

Figure 2 shows another an exemplary embodiment of a dispersive element and spectrometer according to the principle presented. In this particular embodiment more surfaces are used to make the device more compact. In fact, the additional surfaces are planar (planar surfaces) and arranged such that light entering the dispersive body via the entrance surface 101 strikes the particular planar surface under an angle equal or greater than the critical angle. Thus, said light is reflected by means of total internal reflection. The planar surfaces act as beam directing means similar to mirrors or beam-splitters in conventional spectroscopic setups.

The layout of the dispersive element and spectrometer may again be best explained by following the path of light emitted by the light source 000 and entering a dispersive body 200. Basically, the dispersive body 200 has a principal plane x, y and basically the light propagates within this principal plane. The extension in height z is not shown in this drawing.

Light is emitted from the light source 000 and radiates through the entrance aperture 010, e.g. a multi-slit aperture. The light enters the dispersive body 200 at the entrance surface 201. The light is reflected at a first planar surface 206 by means of TIR and changes its direction by a deflection angle, 90 degrees, for example. The light is then collimated by the collimation surface 202 positioned downstream the first planar surface 206. As discussed with respect to Figure 1 collimation occurs due to the curvature of collimation surface 202 and by means of TIR. Furthermore, the so collimated light changes its direction by a deflection angle, here 90 degrees. The collimated light is bent by 90 degrees at a second planar surface 207 positioned downstream the collimation surface 202, again by means of TIR. The light then exits the dispersive body 200 at the first optical interface 203. Different wavelengths of light are separated at the plastic (glass)/air interface due to material specific dispersion. The different wavelengths are separated further when the light passes through the second optical surface 204, and further via passing through a third planar surface 208 and a fourth planar surface 209. The third planar surface 208 and fourth planar surface 209 are positioned downstream the second optical surface 204. In fact, the third planar surface 208 and fourth planar surface 209 can be considered an optical interface in the sense introduced above. Light strikes these surfaces under a tilted angle and is dispersed due to the change of index of refraction at the respective at the plastic (glass)/air interface.

The dispersed light enters the dispersive body 200 via the fourth planar surface 209 and further propagates within the dispersive body 200. The collection surface 205 is positioned downstream the fourth planar surface 209 and comprises a curved surface that changes the light direction at a deflection angle, here by 90 degrees, and focuses the different wavelengths onto a focal plane of the light detector 020 after being reflected by a fifth planar surface 210 due to TIR, and exiting the dispersive body 200 via the second planar surface 207 at near normal incident angle. Finally, the photons focused at different wavelengths are detected by the light detector 020, a linear sensor array, for instance.

Most materials have larger index of refraction at shorter wavelengths than in longer wavelengths. Thus, dispersion based spectrometers usually have lower resolutions at longer wavelengths than at shorter wavelengths. To improve resolution at longer wavelengths, the layout of the dispersive element can be complemented by a concave exit surface 312.

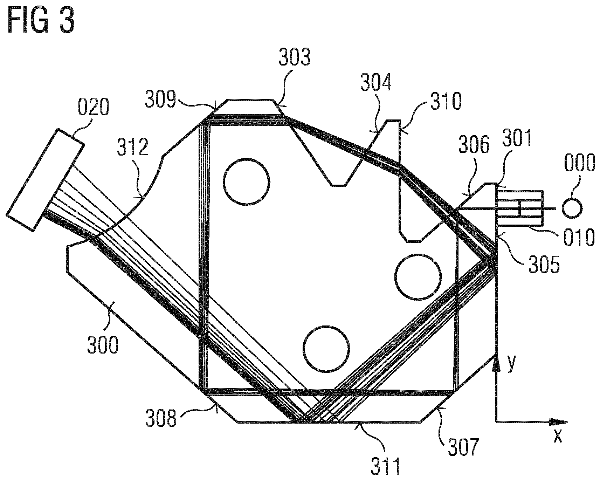

In this context Figure 3 shows an embodiment of a spectrometer for an improved understanding of the principle presented. The design increases the resolution at longer wavelength range and may again be best explained by following the path of light emitted by the light source 000 and entering a dispersive body 300. Basically, the dispersive body 300 has a principal plane x, y and basically the light propagates within this principal plane. The extension in height z is not shown in this drawing.

Light is emitted from the light source 000 and radiates through the entrance aperture 010, e.g. a multi-slit aperture. The light enters the dispersive body 300 at the entrance surface 301. The light is then reflected at a first planar surface 306 due to TIR, and changes its direction by a deflection angle, here 90 degrees. The light is reflected again at a second planar surface 307 and changes its direction by another deflection angle, here 90 degrees. The light is collimated by the curved collimation surface 302 due to TIR and changes its direction by another deflection angle, here 90 degrees. The collimated light is bent by yet another deflection angle, again 90 degrees, at a third and fourth planar surface 308, 309 due to TIR and exits the dispersive body 300 at the first optical interface 303. Different wavelengths of light are separated at the plastic (glass)/air interface at the first optical interface 303 due to refraction and material dispersion. The different wavelengths are separated further when light passes through the second optical interface 304, and further, when passing a fifth planar surface 310 and when entering the dispersive body 300 via the first planar surface 306. In fact, the first and fifth planar surfaces 306, 310 can be considered an optical interface in the sense introduced above. Light strikes these surfaces under a tilted angle and is dispersed due to the change of index of refraction at the respective at the plastic (glass)/air interface.

After entering the dispersive body 300 via the first planar surface 306 the light strikes the collection surface 305 which is a curved surface that changes the light direction by 90 degrees by means of TIR and focuses the different wavelengths at the sensor focal plane due to its particular curvature. Light is reflected again by a sixth planar 311 surface downstream the collection surface 305 due to TIR and exits at the dispersive body 300 via an exit surface 312. The exit surface 312 is a concave curved surface that is positioned with respect to the incident light that the shortest wavelength incidents upon the surface at the normal incident angle, while longer wavelengths are incident on the surface at angles smaller than the normal angle. The longer the wavelength is, the smaller the incident angle is and the larger the refraction angle. Finally, the different wavelengths photons are detected by the linear sensor array 020.

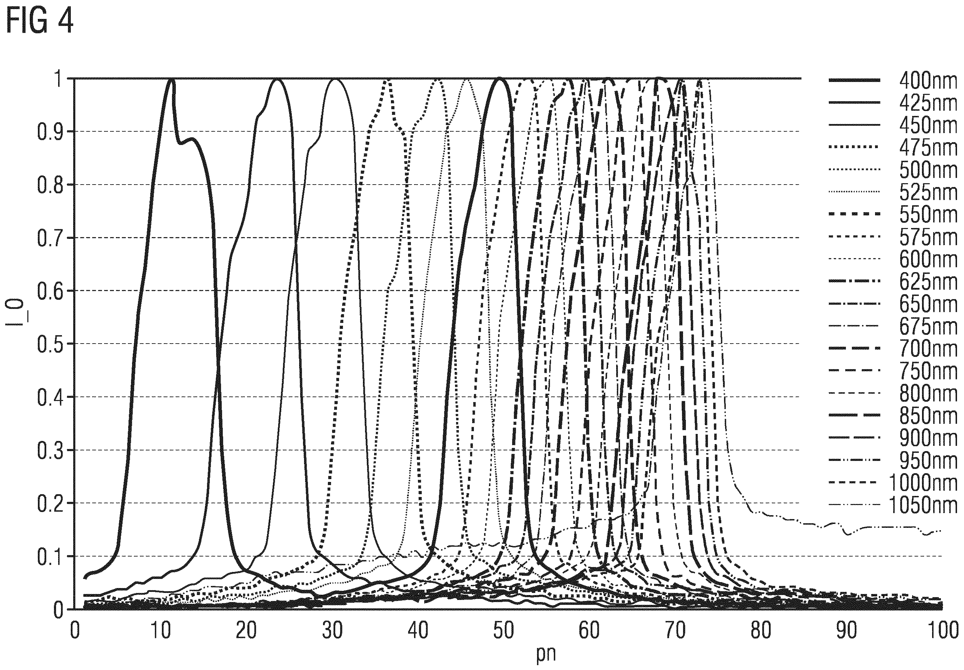

Figure 4 shows a test result using a spectrometer according to the principle presented. The dispersive element and spectrometer have been tested using a linear sensor array as light detector. The sensor has 102 linear pixels with pixel pitch of 85 µm. The test as shown in Figure 4 shows that the device can measure more than 20 color bands from 400 nm to 1050 nm, which covers the whole range of silicon based light sensors. The drawing depicts a normalized signal I_0 versus pixel number pn at various wavelengths (400 to 1050 nm).

Generally, the layout of the dispersive element can deviate from the exemplary embodiments discussed with respect to Figures 1 to 3. Especially, the curvature of the curved surfaces involved can be adjusted, e.g. by means of optical ray tracing. From an optic design point of view it may be desirable to adjust certain curvature in order to control beam divergence and overall resolution depending on the particular light detector and material, for instance. Furthermore, the planar surfaces introduced above have been used mainly as means to redirect the beam of light inside the dispersive body. There may be applications where it would be convenient to design these surfaces with a curvature as well, for example, to further reduce the size of the dispersive element. For example, surfaces can have cylindrical, spherical, elliptical, parabolic, and/or hyperbolic curvature. Thus, the general concept of the dispersive element as proposed can be adjusted and further developed by means of optical design considerations.

### List of reference numerals

- 000: light source
- 010: entrance aperture
- 020: light detector
- 100: dispersive body
- 101: entrance surface
- 102: collimation surface
- 103: first optical interface
- 104: second optical interface
- 105: collection surface
- 200: dispersive body
- 201: entrance surface
- 202: collimation surface
- 203: first optical interface
- 204: second optical interface
- 205: collection surface
- 206: planar surface
- 207: planar surface
- 208: planar surface
- 209: planar surface
- 210: planar surface
- 300: dispersive body
- 301: entrance surface
- 302: collimation surface
- 303: first optical interface
- 304: second optical interface
- 305: collection surface
- 306: planar surface
- 307: planar surface
- 308: planar surface
- 309: planar surface
- 310: planar surface
- 311: planar surface
- 312: exit surface
- I_0: normalized signal
- pn: pixel number

## Claims

1. Spectrometer comprising:
- a dispersive body (100) comprising an optically transparent material, further comprising an entrance surface (101), a collimation surface (102), a first and a second optical interface (103, 104), and a collection surface (105), wherein the collimation surface (102) is located downstream the entrance surface (101) and has a curvature designed to collimate light,
- the first and a second optical interface (103, 104) are located downstream the collimation surface (102) and are designed to receive and disperse light, and
- the collection surface (105) is located downstream the first and second optical interface (103, 104) and has a curvature designed to collect light;
- an optical entrance aperture (010) positioned at a focal plane of the collimation surface (102);
- a light source (000) positioned in front of the optical entrance aperture (010); wherein the spectrometer is arranged such that
- light to be emitted from said light source (000) strikes the entrance aperture (010) and enters the dispersive body (100) at the entrance surface (101),
- the entered light then strikes the collimation surface (102) and is collimated at the collimation surface (102) by means of total internal reflection,
- the collimated light exits the dispersive body (100) at the first optical interface (103, 104) and enters again the dispersive body (100) at the second optical interface (104), wherein the collimated light is dispersed at the first and second optical interfaces (103, 104), and
- the dispersed light is collected by the collection surface (105) and focused onto a focal plane, wherein the light exits the dispersive body (100) at the collection surface (105).

2. Spectrometer comprising:
- a dispersive body (200) comprising an optically transparent material, further comprising an entrance surface (201), a collimation surface (202), a first and a second optical interface (203, 204), first to fifth planar surfaces (206, 207, 208, 209, 210), and a collection surface (205), wherein the collimation surface (202) is located downstream the entrance surface (201) and has a curvature designed to collimate light,
- the first and a second optical interface (203, 204) are located downstream the collimation surface (202) and are designed to receive and disperse light, and
- the collection surface (205) is located downstream the first and second optical interface (203, 204) and has a curvature designed to collect light;
- an optical entrance aperture (010) positioned at a focal plane of the collimation surface (202);
- a light source (000) positioned in front of the optical entrance aperture (010); wherein the spectrometer is designed such that
- light to be emitted from said light source (000) strikes the entrance aperture (010) and enters the dispersive body (200) at the entrance surface (201),
- the light is reflected at a first planar surface (206) by a deflection angle,
- the reflected light is collimated by the collimation surface (202) positioned downstream the first planar surface (206) by means of total internal reflection,
- the collimated light is bent by a second planar surface (207) positioned downstream the collimation surface (202) by means of total internal reflection,
- the bent light exits the dispersive body (100) at the first optical interface (203) and enters again the dispersive body (100)) at the second optical interface (204)), wherein the collimated light is dispersed at the first and second optical interfaces (203, 204),
- the dispersed light passes through a third and a fourth planar surface (208, 209) forming interfaces for further dispersing the received light which are positioned downstream the first and second optical interfaces (203, 204) and
- the dispersed light enters the dispersive body (200) via the fourth planar surface and is collected by the collection surface (205) by which it is deflected and focused onto a focal plane after being reflected by a fifth planar surface (210) due to total internal reflection, wherein the light exits the dispersive body (200) at the second planar surface (207).

3. Spectrometer according to claim 1 or 2, wherein the collimation surface (102, 202) and/or the collection surface (105, 205) are positioned such that light entering the dispersive body (100, 200) via the entrance surface (101, 201) strikes the collimation surface (102, 202) and/or the collection surface (105, 205) under an angle equal or greater than the critical angle and such that said light is reflected due to total internal reflection.

4. Spectrometer according to one of claims 1 to 3, wherein the optically transparent material of the dispersive body (100, 200) has a dispersion of index of refraction high enough in value to disperse the incident light into multiple and, with respect to the focal plane, spatially separated wavelengths of light.

5. Spectrometer according to one of claims 1 to 4, wherein the optically transparent material of the dispersive body (100, 200) comprises a solid, moldable material.

6. Spectrometer according to one of claims 1 to 5, wherein the optically transparent material of the dispersive body (100, 200) comprises a plastic, a thermoplastic or thermosetting plastic, polystyrene, polycarbonate, and/or OKP4.

7. Spectrometer according to one of claims 1 to 5, wherein the optically transparent material of the dispersive body (100, 200) comprises a glass or a flint glass.

8. Spectrometer according to one of claims 1 to 7, wherein the collimation surface (102, 202) and/or the collection surface (105, 205) have cylindrical, spherical, elliptical, parabolic, and/or hyperbolic curvature.

9. Spectrometer according to one of claims 1 to 8, wherein the first and second optical interfaces (103, 104, 203, 204) are positioned such that the collimated light is incident on the interfaces (103, 104, 203, 204) at a tilted angle with respect to surface normals of the first and second optical interfaces (103, 104, 203, 204), respectively.

10. Spectrometer according to one of claims 1 to 9, comprising at least one planar surface.

11. Spectrometer according to one of claims 1 to 10, comprising at least one further curved surface.

12. Spectrometer according to one of claims 1 to 11, comprising at least one exit surface (311) which comprises a concave curvature.

13. Spectrometer according to one of claims 1 to 12, wherein the light source is positioned at a focal plane of the collimation surface (102, 202).

14. Spectrometer according to one of claims 1 to 13, wherein the entrance aperture (010) is a slit, a multi-slit, a pinhole, a multi-pinhole or a fiber-tip.

15. Spectrometer according to one of claims 1 to 14, wherein the light detector (020) is a linear array detector or a two dimensional detector, in particular a Charge Coupled Device (CCD) or a Complementary Metal Oxide Semiconductor detector (CMOS).

## Patentansprüche

1. Spektrometer, umfassend:
- einen dispersiven Körper (100), der ein optisch transparentes Material umfasst, darüber hinaus eine Eintrittsfläche (101), eine Kollimationsfläche (102), eine erste und eine zweite optische Grenzfläche (103, 104) und eine Kollektionsfläche (105) umfassend, wobei sich die Kollimationsfläche (102) der Eintrittsfläche (101) nachgeordnet befindet und eine zum Kollimieren von Licht gestaltete Krümmung hat,
- sich die erste und eine zweite optische Grenzfläche (103, 104) der Kollimationsfläche (102) nachgeordnet befinden und zum Empfangen und Zerstreuen von Licht gestaltet sind, und
- sich die Kollektionsfläche (105) der ersten und zweiten optischen Grenzfläche (103, 104) nachgeordnet befindet und eine zum Sammeln von Licht gestaltete Krümmung hat;
- eine optische Eintrittsöffnung (010), die in einer Brennebene der Kollimationsfläche (102) angeordnet ist;
- eine Lichtquelle (000), die vor der optischen Eintrittsöffnung (010) angeordnet ist; wobei das Spektrometer so eingerichtet ist, dass
- das aus der Lichtquelle (000) zu emittierende Licht auf die Eintrittsöffnung (010) trifft und an der Eintrittsfläche (101) in den dispersiven Körper (100) eintritt,
- das eingetretene Licht dann auf die Kollimationsfläche (102) auftrifft und an der Kollimationsfläche (102) mittels Totalreflexion kollimiert wird,
- das kollimierte Licht aus dem dispersiven Körper (100) an der ersten optischen Grenzfläche (103, 104) austritt und an der zweiten optischen Grenzfläche (104) wieder in den dispersiven Körper (100) eintritt, wobei das kollimierte Licht an der ersten und zweiten optischen Grenzfläche (103, 104) zerstreut wird, und
- das zerstreute Licht durch die Kollektionsfläche (105) gesammelt und auf eine Brennebene fokussiert wird, wobei das Licht an der Kollektionsfläche (105) aus dem dispersiven Körper (100) austritt.

2. Spektrometer, umfassend:
- einen dispersiven Körper (200), der ein optisch transparentes Material umfasst, darüber hinaus eine Eintrittsfläche (201), eine Kollimationsfläche (202), eine erste und eine zweite optische Grenzfläche (203, 204), eine erste bis eine fünfte plane Fläche (206, 207, 208, 209, 210) und eine Kollektionsfläche (205) umfassend, wobei sich die Kollimationsfläche (202) der Eintrittsfläche (201) nachgeordnet befindet und eine zum Kollimieren von Licht gestaltete Krümmung hat,
- sich die erste und eine zweite optische Grenzfläche (203, 204) der Kollimationsfläche (202) nachgeordnet befinden und zum Empfangen und Zerstreuen von Licht gestaltet sind, und
- sich die Kollektionsfläche (205) der ersten und zweiten optischen Grenzfläche (203, 204) nachgeordnet befindet und eine zum Sammeln von Licht gestaltete Krümmung hat;
- eine optische Eintrittsöffnung (010), die in einer Brennebene der Kollimationsfläche (202) angeordnet ist;
- eine Lichtquelle (000), die vor der optischen Eintrittsöffnung (010) angeordnet ist; wobei das Spektrometer so eingerichtet ist, dass
- das aus der Lichtquelle (000) zu emittierende Licht auf die Eintrittsöffnung (010) trifft und an der Eintrittsfläche (201) in den dispersiven Körper (200) eintritt,
- das Licht an einer ersten planen Fläche (206) mit einem Ablenkungswinkel reflektiert wird,
- das reflektierte Licht durch die Kollimationsfläche (202), die sich der ersten planen Fläche (206) nachgeordnet befindet, mittels Totalreflexion kollimiert wird,
- das kollimierte Licht durch eine zweite plane Fläche (207), die sich der Kollimationsfläche (202) nachgeordnet befindet, mittels Totalreflexion gebeugt wird,
- das gebeugte Licht aus dem dispersiven Körper (200) an der ersten optischen Grenzfläche (203) austritt und an der zweiten optischen Grenzfläche (204) wieder in den dispersiven Körper (200) eintritt, wobei das kollimierte Licht an der ersten und zweiten optischen Grenzfläche (203, 204) zerstreut wird,
- das zerstreute Licht durch eine dritte und eine vierte plane Fläche (208, 209) hindurchgeht, die Grenzflächen zum weiteren Zerstreuen des empfangenen Lichts bilden, die sich der ersten und zweiten optischen Grenzfläche (203, 204) nachgeordnet befinden, und
- das zerstreute Licht über die vierte plane Fläche in den dispersiven Körper (200) eintritt und durch die Kollektionsfläche (205) gesammelt wird, durch die es abgelenkt und auf eine Brennebene fokussiert wird, nachdem es durch eine fünfte plane Fläche (210) aufgrund von Totalreflexion reflektiert wurde, wobei das Licht an der zweiten planen Fläche (207) aus dem dispersiven Körper (200) austritt.

3. Spektrometer nach Anspruch 1 oder 2, wobei die Kollimationsfläche (102, 202) und/oder die Kollektionsfläche (105, 205) so angeordnet ist bzw. sind, dass Licht, das über die Eintrittsfläche (101, 201) in den dispersiven Körper (100, 200) eintritt, auf die Kollimationsfläche (102, 202) und/oder die Kollektionsfläche (105, 205) unter einem Winkel auftrifft, der gleich oder größer als der kritische Winkel ist, und so, dass das Licht aufgrund von Totalreflexion reflektiert wird.

4. Spektrometer nach einem der Ansprüche 1 bis 3, wobei das optisch transparente Material des dispersiven Körpers (100, 200) eine Zerstreuung mit einem Brechungsindex hat, der vom Wert her hoch genug ist, um das einfallende Licht in mehrere und in Bezug auf die Brennebene räumlich getrennte Lichtwellenlängen zu zerstreuen.

5. Spektrometer nach einem der Ansprüche 1 bis 4, wobei das optisch transparente Material des dispersiven Körpers (100, 200) ein festes, formbares Material umfasst.

6. Spektrometer nach einem der Ansprüche 1 bis 5, wobei das optisch transparente Material des dispersiven Körpers (100, 200) einen Kunststoff, einen Thermoplast oder Duroplast, Polystyrol, Polycarbonat und/oder OKP4 umfasst.

7. Spektrometer nach einem der Ansprüche 1 bis 5, wobei das optisch transparente Material des dispersiven Körpers (100, 200) ein Glas oder ein Flintglas umfasst.

8. Spektrometer nach einem der Ansprüche 1 bis 7, wobei die Kollimationsfläche (102, 202) und/oder die Kollektionsfläche (105, 205) eine zylindrische, sphärische, elliptische, parabolische und/oder hyperbolische Krümmung hat bzw. haben.

9. Spektrometer nach einem der Ansprüche 1 bis 8, wobei die erste und zweite optische Grenzfläche (103, 104, 203, 204) so angeordnet sind, dass das kollimierte Licht mit einem schrägen Winkel in Bezug auf die Oberflächensenkrechten der ersten bzw. zweiten optischen Grenzflächen (103, 104, 203, 204) auf die Grenzflächen (103, 104, 203, 204) einfällt.

10. Spektrometer nach einem der Ansprüche 1 bis 9, mindestens eine plane Fläche umfassend.

11. Spektrometer nach einem der Ansprüche 1 bis 10, mindestens eine weitere gekrümmte Fläche umfassend.

12. Spektrometer nach einem der Ansprüche 1 bis 11, mindestens eine Austrittsfläche (311) umfassend, die eine konkave Krümmung umfasst.

13. Spektrometer nach einem der Ansprüche 1 bis 12, wobei die Lichtquelle in einer Brennebene der Kollimationsfläche (102, 202) angeordnet ist.

14. Spektrometer nach einem der Ansprüche 1 bis 13, wobei es sich bei der Eintrittsöffnung (010) um einen Schlitz, einen Mehrfachschlitz, ein Stiftloch, ein Mehrfachstiftloch oder eine Faserspitze handelt.

15. Spektrometer nach einem der Ansprüche 1 bis 14, wobei es sich bei dem Lichtdetektor (020) um einen Linearanordnungsdetektor oder einen zweidimensionalen Detektor, insbesondere ein ladungsgekoppeltes Bauelement (CCD) oder einen komplementären Metalloxidhalbleiterdetektor (CMOS) handelt.

## Revendications

1. Spectromètre comprenant :
- un corps dispersif (100) comprenant un matériau optiquement transparent, comprenant en outre une surface d'entrée (101), une surface de collimation (102), une première et une deuxième interface optique (103, 104), et une surface de collecte (105), sachant que la surface de collimation (102) est située en aval de la surface d'entrée (101) et présente une courbure conçue pour collimater de la lumière,
- la première et une deuxième interface optique (103, 104) sont situées en aval de la surface de collimation (102) et sont conçues pour recevoir et disperser de la lumière, et
- la surface de collecte (105) est située en aval de la première et de la deuxième interface optique (103, 104) et présente une courbure conçue pour collecter de la lumière ;
- un orifice d'entrée optique (010) positionné dans un plan focal de la surface de collimation (102) ;
- une source de lumière (000) positionnée en face de l'orifice d'entrée optique (010) ; sachant que le spectromètre est agencé de telle sorte que
- de la lumière devant être émise depuis ladite source de lumière (000) frappe l'orifice d'entrée (010) et entre dans le corps dispersif (100) au niveau de la surface d'entrée (101),
- la lumière entrée frappe ensuite la surface de collimation (102) et est collimatée au niveau de la surface de collimation (102) moyennant réflexion interne totale,
- la lumière collimatée sort du corps dispersif (100) au niveau de la première interface optique (103, 104) et entre de nouveau dans le corps dispersif (100) au niveau de la deuxième interface optique (104), sachant que la lumière collimatée est dispersée au niveau de la première et de la deuxième interface optique (103, 104), et
- la lumière dispersée est collectée par la surface de collecte (105) et concentrée sur un plan focal, sachant que la lumière sort du corps dispersif (100) au niveau de la surface de collecte (105).

2. Spectromètre comprenant :
- un corps dispersif (200) comprenant un matériau optiquement transparent, comprenant en outre une surface d'entrée (201), une surface de collimation (202), une première et une deuxième interface optique (203, 204), des première à cinquième surfaces planes (206, 207, 208, 209, 210), et une surface de collecte (205), sachant que la surface de collimation (202) est située en aval de la surface d'entrée (201) et présente une courbure conçue pour collimater de la lumière,
- la première et une deuxième interface optique (203, 204) sont situées en aval de la surface de collimation (202) et sont conçues pour recevoir et disperser de la lumière, et
- la surface de collecte (205) est située en aval de la première et de la deuxième interface optique (203, 204) et présente une courbure conçue pour collecter de la lumière ;
- un orifice d'entrée optique (010) positionné dans un plan focal de la surface de collimation (202) ;
- une source de lumière (000) positionnée en face de l'orifice d'entrée optique (010) ; sachant que le spectromètre est conçu de telle sorte que
- de la lumière devant être émise depuis ladite source de lumière (000) frappe l'orifice d'entrée (010) et entre dans le corps dispersif (200) au niveau de la surface d'entrée (201),
- la lumière est réfléchie au niveau d'une première surface plane (206) à raison d'un angle de déflexion,
- la lumière réfléchie est collimatée par la surface de collimation (202) positionnée en aval de la première surface plane (206) moyennant réflexion interne totale,
- la lumière collimatée est courbée par une deuxième surface plane (207) positionnée en aval de la surface de collimation (202) moyennant réflexion interne totale,
- la lumière courbée sort du corps dispersif (200) au niveau de la première interface optique (203) et entre de nouveau dans le corps dispersif (200) au niveau de la deuxième interface optique (204), sachant que la lumière collimatée est dispersée au niveau de la première et de la deuxième interface optique (203, 204),
- la lumière dispersée passe à travers une troisième et une quatrième surface plane (208, 209) formant des interfaces destinées à disperser davantage la lumière reçue et positionnées en aval de la première et de la deuxième interface optique (203, 204) et
- la lumière dispersée entre dans le corps dispersif (200) via la quatrième surface plane et est collectée par la surface de collecte (205) par laquelle elle est déviée et concentrée sur un plan focal après avoir été réfléchie par une cinquième surface plane (210) par réflexion interne totale, sachant que la lumière sort du corps dispersif (200) au niveau de la deuxième surface plane (207).

3. Spectromètre selon la revendication 1 ou 2, sachant que la surface de collimation (102, 202) et/ou la surface de collecte (105, 205) sont positionnées de telle sorte que de la lumière entrant dans le corps dispersif (100, 200) via la surface d'entrée (101, 201) frappe la surface de collimation (102, 202) et/ou la surface de collecte (105, 205) selon un angle égal ou supérieur à l'angle critique et de telle sorte que ladite lumière soit réfléchie par réflexion interne totale.

4. Spectromètre selon l'une des revendications 1 à 3, sachant que le matériau optiquement transparent du corps dispersif (100, 200) présente une dispersion d'indice de réfraction suffisamment élevée en valeur pour disperser la lumière incidente en une pluralité de longueurs d'ondes spatialement séparées par rapport au plan focal.

5. Spectromètre selon l'une des revendications 1 à 4, sachant que le matériau optiquement transparent du corps dispersif (100, 200) comprend un matériau solide moulable.

6. Spectromètre selon l'une des revendications 1 à 5, sachant que le matériau optiquement transparent du corps dispersif (100, 200) comprend un plastique, un thermoplastique ou un plastique thermodurcissable, du polystyrène, du polycarbonate, et/ou OKP4.

7. Spectromètre selon l'une des revendications 1 à 5, sachant que le matériau optiquement transparent du corps dispersif (100, 200) comprend un verre ou un verre flint.

8. Spectromètre selon l'une des revendications 1 à 7, sachant que la surface de collimation (102, 202) et/ou la surface de collecte (105, 205) ont une courbure cylindrique, sphérique, elliptique, parabolique, et/ou hyperbolique.

9. Spectromètre selon l'une des revendications 1 à 8, sachant que la première et la deuxième interface optique (103, 104, 203, 204) sont positionnées de telle sorte que la lumière collimatée soit incidente sur les interfaces (103, 104, 203, 204) à un angle incliné par rapport à des normales de surface de la première et de la deuxième interface optique (103, 104, 203, 204), respectivement.

10. Spectromètre selon l'une des revendications 1 à 9, comprenant au moins une surface plane.

11. Spectromètre selon l'une des revendications 1 à 10, comprenant au moins une surface courbe supplémentaire.

12. Spectromètre selon l'une des revendications 1 à 11, comprenant au moins une surface de sortie (311) qui comprend une courbure concave.

13. Spectromètre selon l'une des revendications 1 à 12, sachant que la source de lumière est positionnée dans un plan focal de la surface de collimation (102, 202).

14. Spectromètre selon l'une des revendications 1 à 13, sachant que l'orifice d'entrée (010) est une fente, une fente multiple, un trou sténopéique, un trou sténopéique multiple ou une pointe fibre.

15. Spectromètre selon l'une des revendications 1 à 14, sachant que le détecteur de lumière (020) est un détecteur à barrette linéaire ou un détecteur bidimensionnel, en particulier un dispositif à couplage de charge (CCD) ou un détecteur à semiconducteur à oxyde de métal complémentaire (CMOS).
